(19) **Europäisches Patentamt / European Patent Office / Office européen des brevets**

(11) **EP 4 685 465 A1**

(12) **EUROPEAN PATENT APPLICATION**
published in accordance with Art. 153(4) EPC

(43) Date of publication:
**28.01.2026 Bulletin 2026/05**

(21) Application number: **23864119.5**

(22) Date of filing: **18.05.2023**

(51) International Patent Classification (IPC):
**G01N 21/47** (2006.01)   **G01N 1/22** (2006.01)

(52) Cooperative Patent Classification (CPC):
Y02A 50/20

(86) International application number:
**PCT/CN2023/094924**

(87) International publication number:
**WO 2024/192870 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2023 CN 202310288801**

(71) Applicant: **Huadian Electric Power Research Institute Co., Ltd.**
**Hangzhou, Zhejiang 310000 (CN)**

(72) Inventors:
- **YANG, Yonglong**
  **Hangzhou, Zhejiang 310030 (CN)**
- **ZHANG, Yang**
  **Hangzhou, Zhejiang 310030 (CN)**
- **GUO, Dong**
  **Hangzhou, Zhejiang 310030 (CN)**
- **JIANG, Jianping**
  **Hangzhou, Zhejiang 310030 (CN)**
- **HE, Yongbing**
  **Hangzhou, Zhejiang 310030 (CN)**

- **PEI, Yukun**
  **Hangzhou, Zhejiang 310030 (CN)**
- **DU, Zhen**
  **Hangzhou, Zhejiang 310030 (CN)**
- **LIU, Qiang**
  **Hangzhou, Zhejiang 310030 (CN)**
- **HUANG, Yudong**
  **Hangzhou, Zhejiang 310030 (CN)**
- **FENG, Qianwei**
  **Hangzhou, Zhejiang 310030 (CN)**
- **CHAI, Lei**
  **Hangzhou, Zhejiang 310030 (CN)**
- **LI, Zhuang**
  **Hangzhou, Zhejiang 310030 (CN)**
- **LI, Longtao**
  **Hangzhou, Zhejiang 310030 (CN)**
- **XU, Ketao**
  **Hangzhou, Zhejiang 310030 (CN)**
- **LIU, Bo**
  **Hangzhou, Zhejiang 310030 (CN)**

(74) Representative: **Piticco, Lorena**
**Isler & Pedrazzini AG**
**Giesshübelstrasse 45**
**Postfach 1772**
**8027 Zürich (CH)**

(54) **ONLINE MONITORING DEVICE AND MONITORING METHOD FOR SULFUR TRIOXIDE IN FLUE GAS**

(57) Provided is an online monitoring device for sulfur trioxide in flue gas, which relates to the technical field of gas detection and comprises: a sampling gun, for collecting flue gas; an absorption device, for preventing oxidation of sulfur dioxide and absorbing sulfur trioxide in the flue gas; a mixing box for mixing the absorption liquid and a precipitating agent to obtain a mixed solution; an atomizer for atomizing the mixed solution; an evaporation chamber connected to the atomizer, for drying the mixed solution droplets to form a dry particle airflow; a light scattering measurement chamber connected to the evaporation chamber, for light scattering measurement of the dry particle airflow to obtain a mass concentration of particles; and a control device for determining the concentration of sulfur trioxide in the flue gas according to the mass concentration of particles. The present application converts the gaseous sulfur trioxide into solid, measures the concentration of sulfur trioxide using a light scattering method, and has the advantages of high accuracy, good repeatability, fast measurement speed and online monitoring. It solves the current problem that sulfur trioxide

(Cont. next page)

monitoring can only be achieved by offline monitoring method.

FIG. 1

## Description

**CROSS REFERENCE TO RELATED APPLICATIONS**

This application claims the priority of Chinese Patent Application No. 202310288801.1, filed with the China National Intellectual Property Administration on March 22, 2023, and titled with "ONLINE MONITORING DEVICE AND MONITORING METHOD FOR SULFUR TRIOXIDE IN FLUE GAS", which is hereby incorporated by reference in its entirety.

FIELD

The present application relates to the technical field of gas detection, in particular to an online monitoring device and monitoring method for sulfur trioxide in flue gas.

## BACKGROUND

As China's environmental protection policies become increasingly strict and ultra-low emission reform work gradually progresses, limits of the emission of various unconventional pollutants (PM2.5, $SO_3$, mercury and its compounds, VOCS, etc.) are also proposed. The emission of $SO_3$ has already been restricted in some areas. The $SO_3$ emitted by coal-fired power plants mainly comes from two sources: for one thing, about 0.5%~1.5% of the sulfur is oxidized into $SO_3$ during the coal burning process; for another thing, during the process of denitration of SCR, about 1% of $SO_2$ in the flue gas is converted into $SO_3$ under the action of the catalyst. The emission of $SO_3$ has adverse effects on the subsequent stable operation of equipment and air pollution control. However, since the current national environmental protection standards do not strictly specify the concentration of $SO_3$ emitted, domestic thermal power plants have not yet conducted online monitoring of the concentration of $SO_3$ in the flue gas. There are no mature relevant equipment products for the market, and relevant tests are conducted by adopting manual sampling and analysis methods based on current domestic and foreign standards.

At present, the development of technology for monitoring the concentration of $SO_3$ still follows existing domestic and foreign standards. The current standard methods are all offline measurement methods, wherein $SO_3$ samples are first collected through a sampling device, then the flue gas $SO_3$ is converted into sulfate ions, and the concentration of sulfate ions is analyzed based on spectrophotometry, ion chromatography, titration, etc., and then converted into the concentration of flue gas $SO_3$. Although $SO_3$ can be monitored, manual sampling and analysis is prone to large errors and time-consuming.

Therefore, how to ensure high accuracy and fast measurement speed of monitoring of the concentration of sulfur trioxide and realize online monitoring of the concentration of sulfur trioxide are problems that urgently needs to be solved by those skilled in the art.

## SUMMARY

An object of the present application is to provide an online monitoring device and monitoring method for sulfur trioxide in flue gas, to ensure high accuracy and fast measurement speed of monitoring of the concentration of sulfur trioxide, so as to achieve online monitoring of the concentration of sulfur trioxide.

In order to solve the above technical problems, the present application provides an online monitoring device for sulfur trioxide in flue gas, comprising:

a sampling gun, for collecting flue gas;

an absorption device connected to the sampling gun, comprising at least one absorption bottle containing an absorption liquid, for preventing oxidation of sulfur dioxide and absorbing sulfur trioxide in the flue gas;

a mixing box connected to the absorption device, wherein a stirrer is arranged inside the mixing box for mixing the absorption liquid and a precipitating agent to obtain a mixed solution;

an atomizer connected to the mixing box through a peristaltic pump, for atomizing the mixed solution;

an evaporation chamber connected to the atomizer, for drying the mixed solution droplets to form a dry particle airflow;

a light scattering measurement chamber connected to the evaporation chamber, for light scattering measurement of the dry particle airflow to obtain a mass concentration of particles;

and a control device for determining the concentration of sulfur trioxide in the flue gas according to the mass concentration of particles.

Optionally, the online monitoring device further comprises an automatic sampler connected to the absorption device, for providing power for flue gas sampling and setting parameters of flue gas sampling.

Optionally, the online monitoring device further comprises a dosing device, which comprises an absorption liquid storage tank, a precipitating agent storage tank and a cleaning water storage tank;

the absorption liquid storage tank is connected with the absorption device for supplying the absorption liquid to the absorption device;

the precipitating agent storage tank is connected with the mixing box for supplying the precipitating agent to the mixing box;

the cleaning water storage tank is respectively connected with the absorption device and the mixing box for supplying cleaning water.

Optionally, the online monitoring device further comprises a preprocessor with one end connected to the sampler and the other end connected to the absorption device, for filtering dust in the flue gas, separating water from the flue gas, and reducing the temperature of the flue gas.

Optionally, the absorption device comprises two absorption bottles, and the preprocessor is respectively connected to the two absorption bottles in parallel through a first three-way valve.

The present application further provides a method for monitoring sulfur trioxide in flue gas, which is applied to the online monitoring device of sulfur trioxide in flue gas, comprising:

collecting flue gas, absorbing sulfur trioxide in the flue gas using an absorption liquid that prevents oxidation of sulfur dioxide, and mixing the absorption liquid containing sulfur trioxide with a precipitating agent to obtain a mixed solution;
atomizing the mixed solution with an atomizer to obtain atomized mixed solution droplets;
heating the mixed solution droplets through an evaporation chamber to form a dry particle airflow;
performing light scattering measurement on the dry particle airflow using a light scattering measurement chamber to obtain a mass concentration of particles;
determining the concentration of sulfur trioxide in the flue gas according to the mass concentration of particles.

Optionally, collecting flue gas is conducted by: heating the collected flue gas by a sampling gun to maintain its gasification state.

Optionally, before absorbing sulfur trioxide in the flue gas using an absorption liquid that prevents oxidation of sulfur dioxide, the method further comprises: filtering dust in the flue gas, separating water from the flue gas, and reducing temperature of the flue gas using a preprocessor.

Optionally, mixing the absorption liquid containing sulfur trioxide with a precipitating agent to obtain a mixed solution is conducted by:
stirring the absorption liquid and the precipitating agent using a stirrer, and keeping sulfate precipitate in a suspending state to obtain a mixed solution.

Optionally, determining the concentration of sulfur trioxide in the flue gas according to the mass concentration of particles is conducted by:

calculating the concentration of sulfur trioxide according to the mass concentration of particles and a preset formula,
wherein, the preset formula is as follows:

$$C_{SO_3} = \frac{80}{233.4} \times \frac{V_0}{V} \times C_0$$

wherein, $C_{SO_3}$ represents the mass concentration of $SO_3$ in the flue gas; V represents the actual sampling volume of the flue gas; $V_0$ represents the volume of dry particle airflow; $C_0$ represents the mass concentration of particles of barium sulfate; 80 is the molar mass concentration of $SO_3$; and 233.4 is the molar mass concentration of barium sulfate.

The present application provides an online monitoring device for sulfur trioxide in flue gas, comprising: a sampling gun, for collecting flue gas; an absorption device connected to the sampling gun, comprising at least one absorption bottle containing an absorption liquid, for preventing oxidation of sulfur dioxide and absorbing sulfur trioxide in the flue gas; a mixing box connected to the absorption device, wherein a stirrer is arranged inside the mixing box for mixing the absorption liquid and a precipitating agent to obtain a mixed solution; an atomizer connected to the mixing box through a peristaltic pump, for atomizing the mixed solution; an evaporation chamber connected to the atomizer, for drying the mixed solution droplets to form a dry particle airflow; a light scattering measurement chamber connected to the evaporation chamber, for light scattering measurement of the dry particle airflow to obtain a mass concentration of particles; and a control device for determining the concentration of sulfur trioxide in the flue gas according to the mass concentration of particles. The present application converts the gaseous sulfur trioxide into solid and measures the concentration of sulfur trioxide using a light scattering method, which has the advantages of high accuracy, good repeatability, fast measurement speed and online monitoring. It solves the current problem that sulfur trioxide monitoring can only be achieved by offline monitoring method.

The beneficial effects of the method for monitoring sulfur trioxide in flue gas provided by the present application correspond to the device, and the effects are mentioned as above.

**BRIEF DESCRIPTION OF DRAWINGS**

In order to illustrate the embodiments of the present application more clearly, the following will briefly introduce the drawings used in the embodiments. Apparently, the drawings in the following description are only some embodiments of the present application. For those of ordinary skill in the art, other drawings can be further obtained based on these drawings without making inventive effort.

FIG. 1 is a structural diagram of an online monitoring device for sulfur trioxide in flue gas provided by an embodiment of the present application;

FIG. 2 is a structural diagram including an absorption device, a dosing device and a mixing device provided by an embodiment of the present application;

FIG. 3 is a structural diagram including an atomizer and an evaporation chamber provided by an embodiment of the present application;

FIG. 4 is a flow chart of a method for monitoring sulfur trioxide in flue gas provided by an embodiment of the present application.

Reference numerals are as follows: 1 is a sampling gun, 2 is a preprocessor, 3 is an absorption device, 4 is an automatic sampler, 5 is a dosing device, 6 is a mixing box, 7 is an atomizer, 8 is an evaporation chamber, 9 is a light scattering measurement chamber, 10 is a control device, 11 is a first three-way valve, 12 is a second three-way valve, 13 is a third three-way valve, 301 is a first absorption bottle, 302 is a second absorption bottle, 501 is an absorption liquid storage tank, 502 is a precipitating agent storage tank, 503 is a cleaning water storage tank, 601 is a stirrer, 701 is an atomizer gun body, 702 is an atomizer working chamber, 703 is an atomizer nozzle, 801 is a variable temperature regulator, 802 is a heat insulation layer, 803 is an evaporation chamber, and 804 is an outlet of dry particle airflow.

DETAILED DESCRIPTION

The technical solutions in the embodiments of the present application will be clearly and completely described below with reference to the drawings used in the embodiments of the present application. Apparently, the described embodiments are only some of the embodiments of the present application, rather than all of the embodiments. Based on the embodiments in the present application, all other embodiments obtained by those of ordinary skill in the art without making inventive efforts fall within the protection scope of the present application.

The core of the present application is to provide an online monitoring device and monitoring method for sulfur trioxide in flue gas.

In order to enable those skilled in the art to better understand the technical solution of the present application, the present application will be further described in detail below in conjunction with the drawings and specific embodiments.

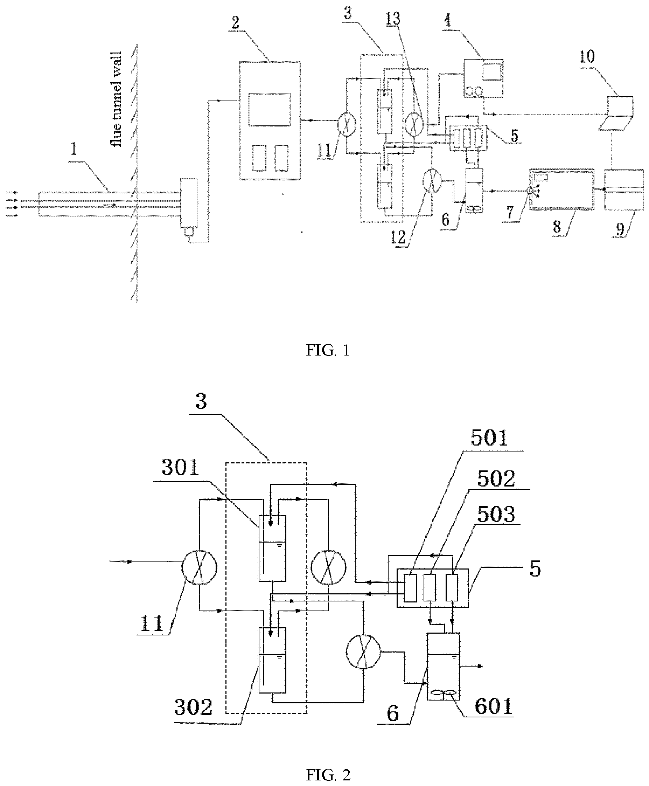

FIG. 1 is a structural diagram of an online monitoring device for sulfur trioxide in flue gas provided by an embodiment of the present application. As shown in FIG. 1, the online monitoring device for sulfur trioxide in flue gas comprises: a sampling gun 1, for collecting flue gas; an absorption device 3 connected to the sampling gun 1, comprising at least one absorption bottle containing an absorption liquid, for preventing oxidation of sulfur dioxide and absorbing sulfur trioxide in the flue gas; a mixing box 6 connected to the absorption device 3, wherein a stirrer 601 is arranged inside the mixing box 6 for mixing the absorption solution and a precipitating agent to obtain a mixed solution; an atomizer 7 connected to the mixing box 6 through a peristaltic pump, for atomizing the mixed solution; an evaporation chamber 8 connected to the atomizer 7, for drying the mixed solution droplets to form a dry particle airflow; a light scattering measurement chamber 9 connected to the evaporation chamber 8, for light scattering measurement of the dry particle airflow to obtain a mass concentration of particles; and a control device 10 for determining the concentration of sulfur trioxide in the flue gas according to the mass concentration of particles.

The online monitoring device for sulfur trioxide in flue gas provided by an embodiment of the present application comprises: a sampling gun, for collecting flue gas; an absorption device connected to the sampling gun, comprising at least one absorption bottle containing an absorption liquid, for preventing oxidation of sulfur dioxide and absorbing sulfur trioxide in the flue gas; a mixing box connected to the absorption device, wherein a stirrer is arranged inside the mixing box for mixing the absorption liquid and a precipitating agent to obtain a mixed solution; an atomizer connected to the mixing box through a peristaltic pump, for atomizing the mixed solution; an evaporation chamber connected to the atomizer, for drying the mixed solution droplets to form a dry particle airflow; a light scattering measurement chamber connected to the evaporation chamber, for light scattering measurement of the dry particle airflow to obtain a mass concentration of particles; and a control device for determining the concentration of sulfur trioxide in the flue gas according to the mass concentration of particles. The present application converts the gaseous sulfur trioxide into solid, measures the concentration of sulfur trioxide using a light scattering method, and has the advantages of high accuracy, good repeatability, fast measurement speed and online monitoring. It solves the current problem that sulfur trioxide monitoring can only be achieved by offline monitoring method.

Based on the above embodiments, in addition to the above-mentioned devices, the online monitoring device further comprises an automatic sampler 4 communicated with the absorption device 3, for providing power for flue gas sampling and setting parameters of flue gas sampling. The online monitoring device further comprises a dosing device 5, which comprises an absorption liquid storage tank 501, a precipitating agent storage tank 502, and a cleaning water storage tank 503. The absorption liquid storage tank 501 is communicated with the absorption device 3, and is used for supplying the absorption liquid for the absorption device 3. The precipitating agent storage tank 502 is communicated with the mixing box 6 for supplying the precipitating agent to the mixing box 6. The cleaning water storage tank 503 is communicated with the absorption device 3 and the mixing box 6 respectively for supplying cleaning water. The online monitoring device further comprises a preprocessor 2 with one end connected to the sampling gun 1 and the other end connected to the absorption device 3. The preprocessor 2 is used for filtering dust in the flue gas, separating water from the flue gas, and reducing the temperature of the flue gas.

In order to better understand the online monitoring device for sulfur trioxide in flue gas of the present application, each part of the online monitoring device is introduced one by one below.

Sampling gun 1: One end of the sampling gun 1 is placed in the flue tunnel, and the other end is connected to the preprocessor 2. The heating temperature of the sampling gun 1 is 150-220°C, so that the flue gas is in a gasification state during the whole sampling process, avoiding losses caused by flue gas condensation in the part of sampling gun 1.

Preprocessor 2: Preprocessor 2 is used for filtering dust in the flue gas, separating water from the flue gas, reducing the temperature of the flue gas, and purifying the sample flue gas.

Absorption device 3: Absorption device 3 is equipped with an isopropanol solution which prevents oxidation of $SO_2$. Isopropanol has a concentration of 5%-25%, and is used to absorb $SO_3$ and prevent $SO_2$ from oxidation. Two absorption bottles may be arranged in the absorption device 3 (a first absorption bottle 301 and a second absorption bottle 302), which are arranged in parallel. The volume of the absorption liquid in the absorption bottle is 100 mL. The flue gas $SO_3$ enters the absorption liquid by bubbling, and is completely absorbed. The absorption duration is 5-10 min. The two absorption bottles are switched cyclically to achieve continuous sampling. A first three-way valve 11 is installed in front of the absorption device 3, one end of the first three-way valve 11 is connected to the preprocessor 2, and the other two ends are respectively connected to two parallel absorption bottles. A second three-way valve 12 is installed behind the absorption device 3, and connects to two parallel absorption bottles and the mixing box 6 respectively. There is a pipeline on the upper part of the absorption device 3 connecting to the absorption liquid storage tank 501 of the dosing device 5. A third three-way valve 13 is installed behind the absorption device 3, and connects to two parallel absorption bottles and the automatic sampler 4 respectively.

Dosing device 5: An absorption liquid storage tank 501, a precipitating agent storage tank 502 and a cleaning water storage tank 503 are provided inside the dosing device 5. The absorption liquid storage tank 501 supplies the absorption liquid for the monitoring device, and the precipitating agent storage tank 502 supplies the precipitating agent for the mixing box 6, where the precipitating agent has a concentration of 5%-35%, and the cleaning water storage tank 503 supplies cleaning water to the absorption bottle and the monitoring system to keep the system clean. A total of 100 mL of the absorption solution after absorbing $SO_3$ is transported to the mixing box 6, and the precipitating agent is added to the mixing box 6 simultaneously. In a feasible way, the precipitating agent may be a barium chloride solution with a concentration of 5%-35%. The absorption liquid is an isopropanol solution with a concentration of 5%-25%. It should be noted that the faster and more complete the precipitation per unit time, the better.

Mixing box 6: A stirrer 601 is arranged inside the mixing box 6 to keep the sulfate precipitate in a suspending state until the reaction is completed to form a mixed solution. FIG. 2 is a structural diagram including an absorption device, a dosing device and a mixing device provided by an embodiment of the present application. The upper part of the mixing box 6 has a pipeline connected to the dosing device 5, and one end of the mixing box 6 is connected to the atomizer 7 through a peristaltic pump.

Atomizer 7: The mixed solution is sprayed into the evaporation chamber 8 through the atomizer 7, and 90% of the droplets sprayed by the atomizer 7 have a particle size less than 30 $\mu$m.

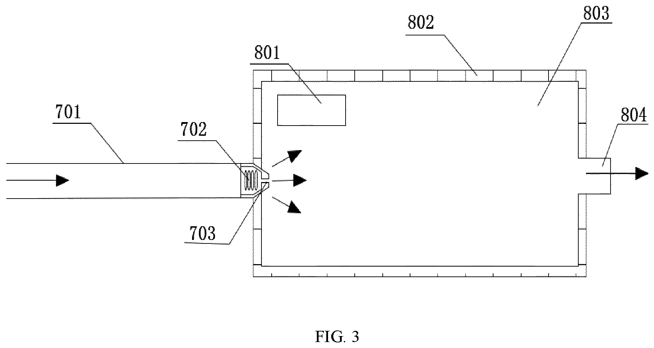

Evaporation chamber 8: Evaporation chamber 8 adopts electric heating. The heating temperature range is 200-300°C, and the size space and temperature parameters are designed to match, so that the mixed solution droplets can be dried in the evaporation chamber 8 to form a dry particle airflow, which then enters the light scattering measurement chamber 9. FIG. 3 is a structural diagram including an atomizer and an evaporation chamber provided by an embodiment of the present application. As shown in FIG. 3, the atomizer 7 comprises an atomizer gun body 701, an atomizer working chamber 702, and an atomizer nozzle 703. The atomizer nozzle 703 can be a double spiral atomization nozzle, made of stainless steel. The evaporation chamber 8 comprises a variable temperature regulator 801 (temperature accuracy $\pm$1°C), a heat insulation layer 802, an evaporation chamber 803, and a dry particle airflow outlet 804. The atomizer nozzle 703 is connected to one side of the evaporation chamber 8, and the opposite side is the dry particle airflow outlet 804. The dry particle airflow outlet 804 is connected to the light scattering measurement chamber 9.

Light scattering measurement chamber 9: Light scattering measurement chamber 9 uses visible light as the light source. When the dry particle airflow passes through the measurement chamber, the light shines on the particle airflow, and the light scattering intensity of the particles is measured. The light scattering intensity of the particles is proportional to the mass concentration of particles. Through photoelectric information conversion, the mass concentration of particles is obtained. After the measurement, the dry particle airflow is discharged to the atmosphere. The light scattering measurement chamber 9 can ensure that the incident angle of the light source is adjusted to the distribution of particles in the light scattering measuring chamber 9, fully ensuring the accuracy of the measurement results. The light scattering adjustment angles are greater than 6. The number of scattering light receivers installed corresponds to the number of adjustable angles.

Control device 10: A data processing system is arranged inside the control device 10. The control device 10 is connected to the light scattering measurement chamber 9 and receives and processes the feedback signal from the light scattering measurement chamber 9. The above-mentioned particles are formed by drying sulfate precipitates. The mass of the sulfate radical is calculated, so as to calculate the concentration of flue gas $SO_3$, thereby completing the online monitoring of flue gas $SO_3$.

Automatic sampler 4: Automatic sampler 4 is used for setting parameters of flue gas sampling and providing power for flue gas sampling. Specifically, the sampling duration of each group of absorption bottles is 5-10 minutes. The duration can be adjusted according to the concentration of the flue gas $SO_3$. The detection process (from the mixing box to the particle discharge) takes about 90 seconds. The automatic sampler 4 and the control device 10 are communicably connected.

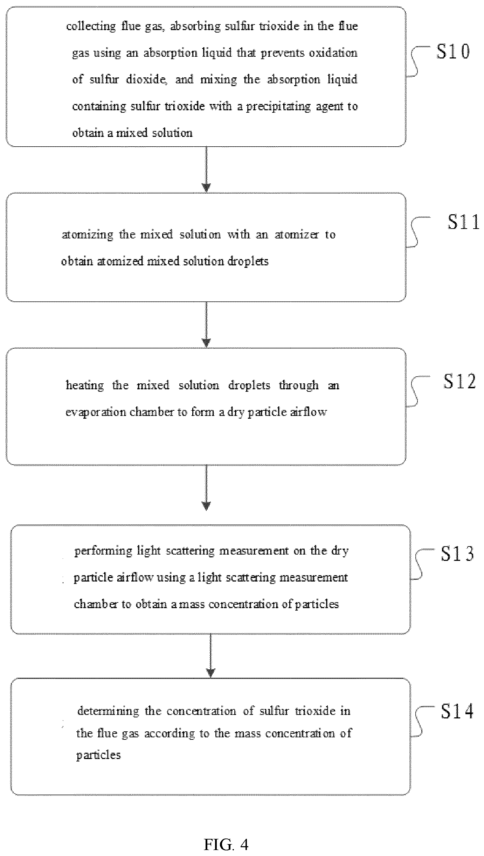

Based on the above embodiments, FIG. 4 is a flow chart of a method for monitoring sulfur trioxide in flue gas provided by an embodiment of the present application. As shown in FIG. 4, the method for monitoring sulfur trioxide in flue gas, which is applied to the above-mentioned online monitoring device for sulfur trioxide in flue gas, comprises:

> S10: collecting flue gas, absorbing sulfur trioxide in the flue gas using an absorption liquid that prevents oxidation of sulfur dioxide, and mixing the absorption liquid containing sulfur trioxide with a precipitating agent to obtain a mixed solution;

> wherein, collecting flue gas by heating using a sampling gun to maintain the flue gas in a gasification state; before absorbing sulfur trioxide in the flue gas using an absorption liquid that prevents oxidation of sulfur dioxide, filtering dust in the flue gas, separating water from the flue gas, and reducing the temperature of the flue gas using the preprocessor 2; and stirring the absorption liquid and the precipitating agent using a stirrer, and keeping the sulfate precipitate in a suspending state to obtain a mixed solution;

> S11: atomizing the mixed solution with an atomizer to obtain atomized mixed solution droplets;

> S12: heating the mixed solution droplets through an evaporation chamber to form a dry particle airflow;

> S13: performing light scattering measurement on the dry particle airflow using a light scattering measurement chamber to obtain a mass concentration of particles;

> S14: determining the concentration of sulfur trioxide in the flue gas according to the mass concentration of particles.

The technical principle of the present application is to convert $SO_3$ in flue gas into barium sulfate particles, then measure the ingredients of gaseous pollutants using the principle of particle measurement, that is, measure the mass concentration of barium sulfate particles using the light scattering method, and then calculate the mass concentration of $SO_3$. The light scattering method (optical method) has good measurement sustainability, and achieves a breakthrough in $SO_3$ measurement technology in terms of the measurement principle.

Chemical reaction in the process of collecting flue gas $SO_3$:

The first step: $SO_3(g) + H_2O(l) = H_2SO_4(l)$

The second step: $H_2SO_4(l) + BaCl_2(l) = BaSO_4(s) + 2HCl(g)$

Total reaction: $SO_3(g) + H_2O(l) + BaCl_2(l) = BaSO_4(s) + 2HCl(g)$

The concentration of $SO_3$ in flue gas is calculated as follows:

$$C_{SO_3} = \frac{80}{233.4} \times \frac{V_0}{V} \times C_0$$

wherein, $C_{SO_3}$ represents the mass concentration of $SO_3$ in flue gas, $mg/m^3$; V represents the actual sampling volume of the flue gas, L; $V_0$ represents the volume of dry particle airflow, L; $C_0$ represents the mass concentration of particles of barium sulfate, $mg/m^3$; 80 is the molar mass concentration of $SO_3$; 233.4 is the molar mass concentration of barium sulfate.

Combined with the above-mentioned online monitoring device for sulfur trioxide in flue gas, the specific steps of monitoring $SO_3$ are as follows:

> (1) integrating and assembling the above instruments and components to form a complete device (online monitoring device for sulfur trioxide);

> (2) inserting the sampling gun 1 into the sampling hole, connecting the power supply, starting the instrument, performing preheating with a heating component, starting the control device 10, and setting the sampling parameters and analysis and monitoring parameters;

(3) delivering the absorption liquid to the absorption bottle with the dosing device 5 and accurately controlling the volume at 100 mL;

(4) when the device being ready, starting the automatic sampler 4 to start sampling, and sampling for 5 minutes;

(5) discharging the flue gas after it passing through the sampling gun 1, preprocessor 2, absorption device 3, and automatic sampler 4;

(6) absorbing $SO_3$ in the flue gas by the absorption liquid, then transporting the mixture to the mixing box 6, and delivering the precipitating agent to the mixing box 6 with the dosing device 5;

(7) after a mixed suspension being formed, spraying it into the evaporation chamber 8 through the atomizer 7, and quickly evaporating the atomized suspension to dryness under the high temperature of the evaporation chamber 8 to form a dry particle airflow entering the light scattering measurement chamber 9;

(8) performing measurement and analysis with the light scattering measurement chamber 9 to obtain the mass concentration of particles in the airflow, and transmitting the data to the control device 10;

(9) after the collection of the sampling data and analysis data by the control device 10 being completed, calculating the concentration of the flue gas $SO_3$ through the calculation formula, and displaying it on the display screen, where the whole process is completed within 7 minutes;

(10) switching the absorption bottles through the three-way valve, wherein one group starts continuous sampling, and the other group starts analysis, forming the next cycle of sampling, analysis and monitoring.

(11) realizing continuous online monitoring of flue gas $SO_3$ by repeating (4)-(10).

The method for monitoring sulfur trioxide in flue gas provided by an embodiment of the present application, which is applied to the above-mentioned online monitoring device for sulfur trioxide in flue gas, comprising: collecting flue gas, absorbing sulfur trioxide in the flue gas using an absorption liquid that prevents oxidation of sulfur dioxide, and mixing the absorption liquid containing sulfur trioxide with a precipitating agent to obtain a mixed solution; atomizing the mixed solution with an atomizer to obtain atomized mixed solution droplets; heating the mixed solution droplets through an evaporation chamber to form a dry particle airflow; performing light scattering measurement on the dry particle airflow using a light scattering measurement chamber to obtain a mass concentration of particles; determining the concentration of sulfur trioxide in the flue gas according to the mass concentration of particles. The present application converts the gaseous sulfur trioxide into solid, measures the concentration of sulfur trioxide using a light scattering method, and has the advantages of high accuracy, good repeatability, fast measurement speed and online monitoring. It solves the current problem that sulfur trioxide monitoring can only be achieved by offline monitoring method.

The present application renders $SO_3$ measurement technology no longer limited to chemical analysis methods, and solidifies gaseous components, providing new ideas and directions for measurement technology of gaseous pollutant. The light scattering measurement method has the advantages of high accuracy, good repeatability, fast measurement speed, high degree of intelligence, and online monitoring, which solves the current problem that $SO_3$ monitoring can only be achieved by offline monitoring method, and provides new technical support for statistics of $SO_3$ emission of thermal power plants. Continuous sampling and monitoring of the flue gas $SO_3$ can be realized through parallel components. Segmented installation in the tail flue system can assist existing environmental protection facilities to achieve coordinated control of $SO_3$ and reduce the emission of flue gas $SO_3$. Assembling a complete set is easy to operate and has few interference factors. The volume of the evaporation chamber can be effectively reduced by controlling the droplet size and the temperature of the evaporation chamber using an atomizer atomizing the mixed solution and an adjustable temperature control device, so as to save device investment costs and layout space. The sampling side and the analysis and measurement side are intelligently integrated using an automatic control device, which is conducive to the intelligent development and optimization of the monitoring device.

The online monitoring device and monitoring method for sulfur trioxide in flue gas provided by the present application is described in detail above. Each embodiment in the specification is described in a progressive manner. Each embodiment focuses on its differences from other embodiments. The same and similar parts between the various embodiments can be referred to each other. The description of the device disclosed in the embodiment is relatively simple, since it corresponds to the method disclosed in the embodiment, and for relevant details, please refer to the description of the method part. It should be noted that those of ordinary skill in the art can make some improvements and modifications to the present application without departing from the principles of the application, and these improvements and modifications also fall within the protection scope of the claims of the present application.

It should also be noted that in this specification, the terms such as first and second are only used to distinguish one entity or operation from another entity or operation, and do not necessarily require or imply the existence of such actual relationship or sequence between these entities or operations. Furthermore, the term "comprise", "include" or any other variation thereof is intended to cover a non-exclusive inclusion such that a process, method, article, or device comprising a set of elements includes not only those elements, but also includes other elements not expressly listed, or elements inherent to the process, method, article or device. Without further limitations, an element defined by the phrase "comprising a ..." does not exclude the presence of additional identical elements in the process, method, article or device comprising the element.

## Claims

1. An online monitoring device for sulfur trioxide in flue gas, comprising:

   a sampling gun, for collecting flue gas;
   an absorption device connected to the sampling gun, comprising at least one absorption bottle containing an absorption liquid, for preventing oxidation of sulfur dioxide and absorbing sulfur trioxide in the flue gas;
   a mixing box connected to the absorption device, wherein a stirrer is arranged inside the mixing box for mixing the absorption liquid and a precipitating agent to obtain a mixed solution;
   an atomizer connected to the mixing box through a peristaltic pump, for atomizing the mixed solution;
   an evaporation chamber connected to the atomizer, for drying the mixed solution droplets to form a dry particle airflow;
   a light scattering measurement chamber connected to the evaporation chamber, for light scattering measurement of the dry particle airflow to obtain a mass concentration of particles; and
   a control device for determining the concentration of sulfur trioxide in the flue gas according to the mass concentration of particles.

2. The online monitoring device for sulfur trioxide in flue gas according to claim 1, further comprising an automatic sampler connected to the absorption device, for providing power for flue gas sampling and setting parameters of flue gas sampling.

3. The online monitoring device for sulfur trioxide in flue gas according to claim 1, further comprising a dosing device, which comprises an absorption liquid storage tank, a precipitating agent storage tank and a cleaning water storage tank;

   the absorption liquid storage tank is connected with the absorption device for supplying the absorption liquid to the absorption device;
   the precipitating agent storage tank is connected with the mixing box for supplying the precipitating agent to the mixing box;
   the cleaning water storage tank is respectively connected with the absorption device and the mixing box for supplying cleaning water.

4. The online monitoring device for sulfur trioxide in flue gas according to claim 1, further comprising a preprocessor with one end connected to the sampler and the other end connected to the absorption device, for filtering dust in the flue gas, separating water from the flue gas, and reducing the temperature of the flue gas.

5. The online monitoring device for sulfur trioxide in flue gas according to claim 4, wherein the absorption device comprises two absorption bottles, and the preprocessor is respectively connected to the two absorption bottles in parallel through a first three-way valve.

6. A method for monitoring sulfur trioxide in flue gas, which is applied to the online monitoring device for sulfur trioxide in flue gas according to any one of claims 1 to 5, comprising:

   collecting flue gas, absorbing sulfur trioxide in the flue gas using an absorption liquid that prevents oxidation of sulfur dioxide, and mixing the absorption liquid containing sulfur trioxide with a precipitating agent to obtain a mixed solution;
   atomizing the mixed solution with an atomizer to obtain atomized mixed solution droplets;
   heating the mixed solution droplets through an evaporation chamber to form a dry particle airflow;
   performing light scattering measurement on the dry particle airflow using a light scattering measurement chamber to obtain a mass concentration of particles;
   determining the concentration of sulfur trioxide in flue gas according to the mass concentration of particles.

7. The method for monitoring sulfur trioxide in flue gas according to claim 6, wherein collecting flue gas is conducted by:
   heating the collected flue gas by a sampling gun to maintain the flue gas in a gasification state.

8. The method for monitoring sulfur trioxide in flue gas according to claim 6, wherein, before absorbing sulfur trioxide in the flue gas using an absorption liquid that prevents oxidation of sulfur dioxide, the method further comprises:
filtering dust in the flue gas, separating water from the flue gas, and reducing temperature of the flue gas using a preprocessor.

9. The method for monitoring sulfur trioxide in flue gas according to claim 6, wherein mixing the absorption liquid containing sulfur trioxide with a precipitating agent to obtain a mixed solution is conducted by:
stirring the absorption liquid and the precipitating agent using a stirrer, and keeping the sulfate precipitate in a suspending state to obtain a mixed solution.

10. The method for monitoring sulfur trioxide in flue gas according to claim 6, wherein determining the concentration of sulfur trioxide in the flue gas according to the mass concentration of particles is conducted by:

calculating the concentration of sulfur trioxide according to the mass concentration of particles and a preset formula;
wherein, the preset formula is as follows:

$$C_{SO_3} = \frac{80}{233.4} \times \frac{V_0}{V} \times C_0$$

wherein, $C_{SO_3}$ represents the mass concentration of $SO_3$ in the flue gas; V represents the actual sampling volume of the flue gas; $V_0$ represents the volume of dry particle airflow; $C_0$ represents the mass concentration of particles of barium sulfate; 80 is the molar mass concentration of $SO_3$; 233.4 is the molar mass concentration of barium sulfate.

FIG. 1

FIG. 2

FIG. 3

collecting flue gas, absorbing sulfur trioxide in the flue gas using an absorption liquid that prevents oxidation of sulfur dioxide, and mixing the absorption liquid containing sulfur trioxide with a precipitating agent to obtain a mixed solution

S10

atomizing the mixed solution with an atomizer to obtain atomized mixed solution droplets

S11

heating the mixed solution droplets through an evaporation chamber to form a dry particle airflow

S12

performing light scattering measurement on the dry particle airflow using a light scattering measurement chamber to obtain a mass concentration of particles

S13

determining the concentration of sulfur trioxide in the flue gas according to the mass concentration of particles

S14

FIG. 4

## INTERNATIONAL SEARCH REPORT

| International application No. |
|---|
| **PCT/CN2023/094924** |

**A. CLASSIFICATION OF SUBJECT MATTER**

G01N21/47(2006.01)i; G01N1/22(2006.01)i

According to International Patent Classification (IPC) or to both national classification and IPC

**B. FIELDS SEARCHED**

Minimum documentation searched (classification system followed by classification symbols)

IPC: G01N21, G01N1, G01N33

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; DWPI; VEN; CJFD: 华电电力科学研究院有限公司, 烟气, 烟道, 三氧化硫, SO3, 吸收液, 吸收剂, 异丙醇, 沉淀剂, 钡盐, 氯化钡, 颗粒, 粒子, 雾化, 喷嘴, 蒸发, 干燥, 散射, 漫反射, smoke, sulfur w trioxide, absor+, isopropanol, precipitants, barium, particle?, nebuliz+, nozzle?, spray+, atomizat+, evapor+, dry+, scatter+, diffuse w reflect+

**C. DOCUMENTS CONSIDERED TO BE RELEVANT**

| Category* | Citation of document, with indication, where appropriate, of the relevant passages | Relevant to claim No. |
|---|---|---|
| Y | CN 103472061 A (ZHEJIANG UNIVERSITY) 25 December 2013 (2013-12-25) description, paragraphs [0008]-[0079], and figures 1-5 | 1-10 |
| Y | EP 0222465 A2 (HITACHI, LTD.) 20 May 1987 (1987-05-20) claims 1-6, description, page 8, line 18-page 10, line 10, and page 16, lines 13-16, and figures 1-4 | 1-10 |
| Y | CN 105181614 A (SHENZHEN RUIJING ENVIRONMENTAL SCIENCE AND TECHNOLOGY CO., LTD.) 23 December 2015 (2015-12-23) description, paragraphs [0017]-[0024], and figure 1 | 1-10 |
| Y | US 4794086 A (AMERICAN AIR LIQUIDE, INC.) 27 December 1988 (1988-12-27) description, column 3, line 43 to column 6, line 32, and figures 1-5 | 1-10 |
| A | JP 2003232758 A (MINERAL SEIMITSU KAGAKU KK) 22 August 2003 (2003-08-22) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 October 2023** | **27 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/094924**

| Patent document cited in search report | | | Publication date (day/month/year) | Patent family member(s) | | | Publication date (day/month/year) |
|---|---|---|---|---|---|---|---|
| CN | 103472061 | A | 25 December 2013 | WO | 2015027546 | A1 | 05 March 2015 |
| EP | 0222465 | A2 | 20 May 1987 | JPS | 6271831 | A | 02 April 1987 |
| | | | | JPH | 0319502 | B2 | 15 March 1991 |
| | | | | EP | 0222465 | A3 | 07 January 1988 |
| | | | | EP | 0222465 | B1 | 27 December 1990 |
| | | | | DE | 3676638 | D1 | 07 February 1991 |
| CN | 105181614 | A | 23 December 2015 | | None | | |
| US | 4794086 | A | 27 December 1988 | EP | 0247180 | A1 | 02 December 1987 |
| | | | | JPS | 63501448 | A | 02 June 1988 |
| | | | | JPH | 06105249 | B2 | 21 December 1994 |
| | | | | WO | 8703371 | A1 | 04 June 1987 |
| JP | 2003232758 | A | 22 August 2003 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310288801